# EUROPEAN PATENT SPECIFICATION

(11) **EP 1 663 691 B1**
(45) Date of publication and mention of the grant of the patent: **22.04.2009**
(21) Application number: 04766780.3
(22) Date of filing: 13.09.2004
(51) Int. Cl.: B60K 15/04

(54) **CLOSURE FOR FUEL-TANK FILLER PIPE**
VERSCHLUSS FÜR KRAFTSTOFFTANKFÜLLLEITUNG
FERMETURE POUR TUYAU DE REMPLISSAGE DE RESERVOIR CARBURANT

(30) Priority: 12.09.2003 FR 0310753
(43) Date of publication of application: 07.06.2006
(73) Proprietor: Inergy Automotive Systems Research (SA), 1120 Bruxelles (BE)
(72) Inventor: BAUDOUX, Patrice, F-02520 Flavy le Martel (FR); THISSELIN, Cathy, F-60200 Compiegne (FR)
(74) Representative: Jacques, Philippe
(86) International application number: PCT/EP2004/052157
(87) International publication number: WO 2005/025913

(56) References cited:
- EP-A- 1 090 796
- WO-A-03/010022
- DE-A- 19 535 335
- DE-A- 19 919 251
- GB-A- 323 716
- US-A- 2 145 212
- US-A- 5 718 265
- US-A- 6 009 920
- US-B1- 6 231 107
- US-B1- 6 279 626

## Description

The present invention relates to a closure system for a fuel-tank filler pipe.

Filler pipes on fuel tanks, in particular tanks on board motor vehicles, are closed off during normal use of the tank outside filling periods. Closure is generally produced by means of a cap that is inserted into the upper part of the pipe while a rotational movement is imparted to it so as to close the pipe in a liquid-tight and gas-tight manner. There are various types of cap, made of metal and/or plastic, sealing being produced by clamping a seal by screwing or by turning a key inserted into the centre of the part outside the pipe.

The operations of removing the cap before filling the tank and of replacing this cap and closing the pipe after filling are usually carried out manually by the user or the filling-station attendant. When the tank has been filled, the cap sometimes might not be replaced, owing to forgetfulness, thus resulting in the loss of this cap and in the pipe remaining open to the atmosphere for a relatively long time. During this period, liquid fuel losses may occur and vapour escapes into the surrounding atmosphere.

With the aim of preventing cap losses and the ensuing atmospheric pollution, closure systems incorporated into the filler cap have been proposed, to replace the traditional cap. Improved versions of these generally comprise blocking means for preventing said systems opening unexpectedly, for example during cleaning of the bowl (indentation in the bodywork where the filler pipe is located and that is closed off by the fuel flap) using a high-pressure cleaning device. Some of them are also provided with a protection shield preventing mud or dust being entrained into the pipe during tank filling.

Thus, for example, application EP 1415844 describes a closure system that comprises an actual shutter (tilting plate), an anti-dust protection shield and a locking mechanism that acts on the latter via a control integrated into the dashboard or via the ignition key. A system of this type has the advantage that it incorporates the functions of locking and protecting against soiling (dust, mud, etc.) and vandalism. However, because the protection flap tilts when opened by the dispensing nozzle, soiling may fall off it and, during tilting of the shutter, be entrained into the filler pipe and, ultimately, into the tank. Furthermore, tilting of said flap requires the provision of a space especially for this purpose, and thereby increases the system's overall size. DE 19919251 discloses a filler pipe according to the preamble of claim 1.

An object of the present invention is therefore to provide a closure system that incorporates a locking system and a soiling-protection system of compact size that offers a lower risk of entraining soiling into the filler pipe and into the tank.

To this end, the present invention relates to a closure system, incorporated into a fuel-tank filler-pipe head, comprising a shutter and a protection shield for the shutter that is movable substantially in the same plane. Preferably, this plane is substantially perpendicular to the axis of the pipe (i.e. does not make an angle of greater than 45°, preferably than 30° and more preferably, than 15° relative to the perpendicular) in order to minimize the overall size and the risks of soiling falling in.

"Fuel tank" is intended to mean any type of tank capable of storing a liquid and/or gaseous fuel under varied pressure and temperature conditions. Reference is more particularly made to tanks of the type found in motor vehicles. The term "motor vehicle" is intended to include not only cars but also motorcycles and lorries.

The filler pipe is a pipe that communicates with the interior of the tank and allows the introduction of fuel.

The tank and the pipe may be made of metal or of plastic.

The closure system according to the invention is well suited to a tank/filler-pipe assembly of which at least one of the two components of the assembly is made of plastic. It is particularly well suited to an assembly of which the filler pipe is made of plastic. Preferably, this closure system itself comprises at least one component made of plastic.

"Plastic" is intended to mean any material comprising at least one synthetic resin polymer.

All types of plastic may be suitable. Particularly suitable plastics belong to the category of thermoplastics.

"Thermoplastic" means any thermoplastic polymer, including thermoplastic elastomers and blends thereof. The term "polymer" denotes not only homopolymers but also copolymers (binary or ternary copolymers in particular). Examples of such copolymers are, with no restriction being implied, random copolymers, linear and other block copolymers and graft copolymers.

Any type of thermoplastic polymer or copolymer whose melting point is below the decomposition temperature is suitable. Synthetic thermoplastics that have a melting range spread over at least 10 degrees Celsius are particularly suitable. Examples of such materials are those that have a polydispersity of their molecular mass.

In particular, use may be made of polyolefins, polyvinyl halides, thermoplastic polyesters, polyketones, polyamides and copolymers thereof. A blend of polymers or copolymers may also be used, as may a mixture of polymeric materials with inorganic, organic and/or natural fillers such as, for example, but with no restriction being implied, carbon, salts and other inorganic derivatives, and natural or polymeric fibres. It is also possible to use multi-layer structures consisting of stacked, integral layers comprising at least one of the polymers or copolymers described above.

The aim of the closure system according to the invention is to perform the function of a cap that closes, in a sealed manner, the upper part of the filler pipe outside tank-filling periods with the aim of avoiding any escape and loss of liquid fuel and vapour to the atmosphere when the tank contains fuel, and also any contamination of the fuel by mud, dust and other soiling emanating from the outside environment. The above aim is achieved with the special technical features of claim 1.

The closure system is incorporated into the pipe head, i.e. it is incorporated into a set of components that are mounted on the upper end of the filler pipe and form a head of which one part formed by a body covers the pipe, and another part is inserted into the top of this pipe over a predetermined length.

The closure system comprises a shutter, i.e. a device closing of the passage for gases and liquids in the pipe. This shutter may have various forms. A particularly suitable form is that of a movable plate that closes off the passage when it is in the closed position. This plate may optionally be coupled to a rotary casing comprising a cylindrical opening . This plate may either move by means of tilting, pivoting or helical movement about an axis, or be movable by means of translation. It is generally subject to considerable mechanical stresses and therefore is advantageously metal-based (i.e. is made principally of metal, which does not exclude the presence of plastic and/or rubber components, such as a seal, a cover, a coating, etc.)

The closure system according to the invention also comprises a protection shield (which is, by definition, above the shutter when the tank entry is viewed from outside the vehicle) that is movable essentially by means of translation in one plane, which (as mentioned above) is preferably substantially perpendicular to the axis of the pipe. Its movement may be either a translation movement or a pivoting movement about one axis (preferably parallel to the axis of the pipe), in which case movement is strictly in one plane. Alternatively, the movement may be at least partly a helical movement around the pipe axis. In that case, the helical movement is preferably such that while the shield is moving, it makes an angle of at least 20°, more preferably at least 30° and even at least 40° with the axis of the pipe. In one, preferred embodiment, the movement of the shield is first helical and then, a sliding in a single plane.

As this shield is generally barely stressed mechanically, it may be made from plastic. Polyacetal and, in particular, polyoxymethylene (POM) gives good results, especially given its good impermeability and chemical resistance to ordinary fuels. Nevertheless, from a visual appearance and perceived quality standpoint, the use of a metal of the stainless-steel type - optionally painted - is preferred. This solution also offers the advantage of making it possible to reduce the thickness of the shield while retaining mechanical strength. The shutter has the form of a metal-based movable plate, and the protection shield is made from polyoxymethylene (POM) or from stainless steel.

The system may also comprise a locking mechanism that acts on the protection shield and/or on the closure system below and/or on an auxiliary component of the system (control flap, for example). The system may also comprise a plurality of separate locking mechanisms that are able to act on different components of the system.

In order to actuate said locking mechanism and thus, respectively, to lock/unlock the closure system, direct or indirect manual action by the user is required.

"Direct manual action" is understood to mean a direct physical action on the part of the user (the hand or finger(s), generally speaking).

"Indirect manual action" is understood to mean the manual actuation of the control (push-button, switch or the like) of an actuator (for example, an electric, electromagnetic or pneumatic actuator) or a motor.

Advantageously, when indirect manual action is used, the system is nevertheless designed to also allow direct manual action with a view to locking/unlocking the system in the event of a power failure, also.

It should be noted that a sensor monitoring proper locking of the system (indicator light or sound indication) may be incorporated into the vehicle's passenger compartment, for greater security.

With a view to rendering access to the filler pipe (and thus to the tank) tamperproof, it may prove advantageous to lock the opening of the fuel flap using an electrical actuator integral with the centralized opening system (doors and other components that open/close on the vehicle). Alternatively, it is possible to render integral with this system the activation of the locking mechanism of the closure system as described in the present application. When this mechanism is activated with the aid of an actuator connected to a control button, a simple way in which to achieve this consists in rendering the control button inactive as long as the centralized locking system is activated (locked).

Numerous locking mechanisms may be applied to the shutter according to the invention, but some that are particularly well suited are described in detail below.

According to a first embodiment (variant A), the locking mechanism acts firstly on the protection shield (either directly or via a control flap carrying the protection shield), and sometimes blocks or sometimes allows the latter to open by means of a movement in a plane perpendicular to the axis of the pipe. Because the protection shield is "carried by" the control flap, it is understood that it covers it (preferably completely), that it is entirely integral therewith and thus moves at the same time as it does.

According to this embodiment, retraction of the protection shield (optionally via a control flap carrying it) directly opens the filler pipe (i.e. also gives rise to retraction of the shutte), or allows automatic opening of the filler via the action of a fuel-dispensing nozzle once the locking system has been deactivated. "Automatic opening" is understood to mean opening achieved by means of the action of the dispensing nozzle alone, to the exclusion of any other mechanical stress. The dispensing nozzle is that which equips the flexible hoses of fuel pumps at filling stations.

This embodiment consists in a filler pipe comprising:
- 2 flaps (including a shutter flap and a control flap carrying the protection shield);
- a body provided with an axis (around which the flaps are movable in rotation) and recesses of appropriate form for guiding the movement of the flaps; and
- a seal placed between the shutter flap and the body.

In this embodiment, it is particularly advantageous to relieve the seal (i.e. to arrange for it to be no longer compressed) prior to the rotation movement of the shutter flap. To this end, the body axis is advantageously provided with a spring compressed by the flaps in the locked position and imparting a helical (and not purely rotary) movement to the flaps, the guide recesses in the body also being of helical form and imparting a helical upward movement to the flaps. According to this embodiment, the form of the flaps and their coupling mechanism are such that a delay exists between the movement of the control flap and that of the shutter flap entrained by the latter. When the system is in the locked position, the spring and the seal are compressed by the two flaps. At the time of unlocking, the initial helical movement of the control flap gives rise to decompression of the seal. It then entrains the actual shutter flap and opens the pipe to allow filling.

In order to render the system according to this embodiment particularly leaktight (to dust, water, etc.), it is advantageous to provide the body with a cover comprising a hole for clearing the filler pipe in the system's open position and to design the protection shield in such a way that it closes off the hole of the cover in the closed, locked position of the system, but is movable and able to slide by translation over (above) the cover during unlocking/opening of the system, the control and shutter flaps being movable under (below) the cover. It is particularly advantageous in this case to provide the protection shield with an anti-dust seal. A

Optionally the shutter may consist of a plate and a rotary ring that collaborate via a bayonet system , and the protection shield of which collaborates with the rotary ring either via a direct connection (common component involving the simultaneous movement of two elements), or via a rack system (the shield and the ring both being components equipped with notches for mutual collaboration). In such a system, a translation movement of the shield in a plan perpendicular to the axis of the pipe gives rise to the rotation of the ring, which, in turn, allows opening of the bayonet system and therefore the tilting of the shutter via a thrust with the aid of the filling dispensing nozzle. It should be noted that in the bayonet system the collaborating parts are arranged, respectively, on the inner cylindrical surface of the ring and over the periphery of the plate.

According to a further embodiment of the present invention, a first locking mechanism acts on the shutter and a second locking mechanism acts on the protection shield to condition (allow or block) a translational movement thereof (in a plane perpendicular to the axis of the filler pipe, obviously). In this embodiment, it is preferable, during unlocking, for action to occur firstly on the first mechanism and then on the second mechanism, but locking of the two mechanisms should be simultaneous. Such a design makes it possible to ensure that the protection shield remains in position for as long as possible and is not actually retracted until it is absolutely necessary (in fact, for filling).

The first locking mechanism comprises a rotary ring and a plate that interact via a bayonet system as described previously. This first mechanism further comprises a rod connected to a bodywork flap (commonly known as the fuel flap) on the one hand and to the rotary ring on the other. By means of the rod, opening of the fuel flap turns the rotary ring and thus unlocks the bayonet system. The second locking mechanism essentially comprises a mechanical device providing for the translational movement of the protection shield and a control button of this device, which is accessible once the fuel flap is open and the locking mechanism of the shutter deactivated.

Preferably, the 2 locking mechanisms are integral such that re-closing of the fuel flap locks both the protection shield and the shutter. One way in which to integrate the two mechanisms consists in rendering both the rod and the protection shield integral with a component that slides around a common shaft parallel to the translational movement of the shield, during their respective movement, and in arranging for the movable component associated with the rod to entrain, during closure of the flap, that which is associated with the shield so as to lock the two mechanisms. One way in which to achieve this in practice consists in causing firstly the movable element associated with the rod to slide during opening of the fuel flap and then in causing the movable element associated with the shield to slide in the same direction so as to become integral therewith, during its opening, in order finally to bring the two movable elements back into their starting position by means of the rod when the flap is re-closed.

According to another embodiment, a return spring is inserted between the 2 movable component, in a torsional arrangement around the shaft, and the control button of the second mechanism (that of the shield) is a push-button connected to a lever arm ending in a blocking lug for collaborating with the protection shield in order to keep it either in a closed position (covering the opening of the filler pipe and its shutter), or in an open position (retracted). The closed position is guaranteed by means of a chamber (relief) especially made in the shield for the purpose of receiving the lug.

The system according to this embodiment of the invention functions as follows: in the locked position, the blocking lug holds the shield in the closed position and the torsion spring is in the rest position between the two movable elements. Upon opening of the fuel flap, the rod gives rise (in addition to the rotation of the ring) to the tensioning of the return spring in the wake of displacement of the first movable element (that of the rod). By means of manual action on the push-button, the blocking lug releases the protection shield (emerges from its "closure" chamber), which, by relaxing of the return spring, is retracted and frees access to the shutter, which is then able to tilt through the effect of a thrust by means of the filling dispensing nozzle, as described in the application WO 03/010022. Next, when filling has been completed and the flap has been closed again, the rod gives rise to the sliding of its movable element, which entrains the spring and the movable element associated with the shield in order to re-lock both mechanisms in their entirety.

In some of the embodiment described above, the shutter can be retracted through the action of a thrust directed against it along an axis parallel to the axis of the pipe head. Various means may be present in order to render the shutter retractable. One means that has yielded good results is a shaft integral with the pipe head and located at the periphery of the shutter, which can serve as rotation axis, allowing tilting of the shutter. In these same embodiments, the shutter is preferably held in the closed position by a return spring. A highly suitable spring is a torsion spring arranged around the shaft, with one end integral with the shutter.

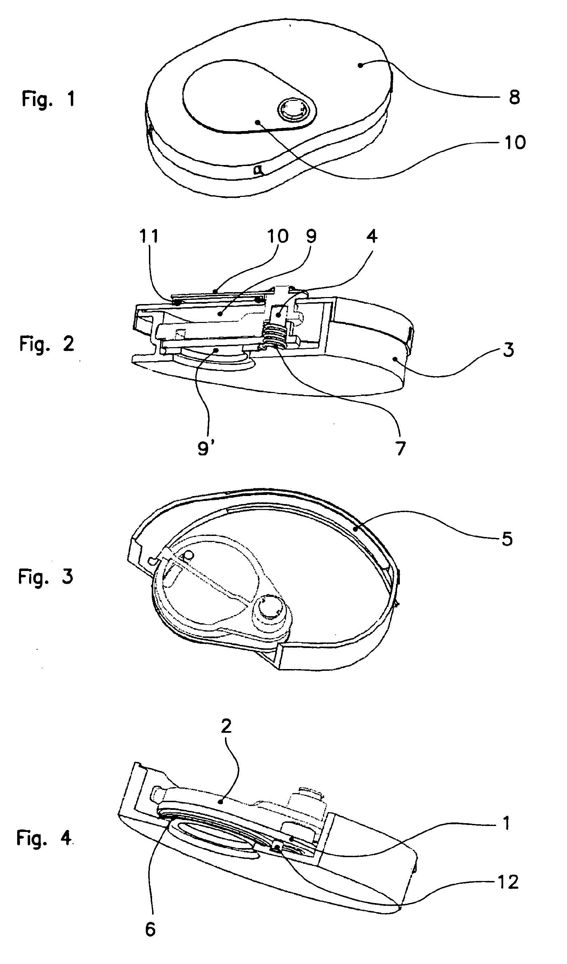

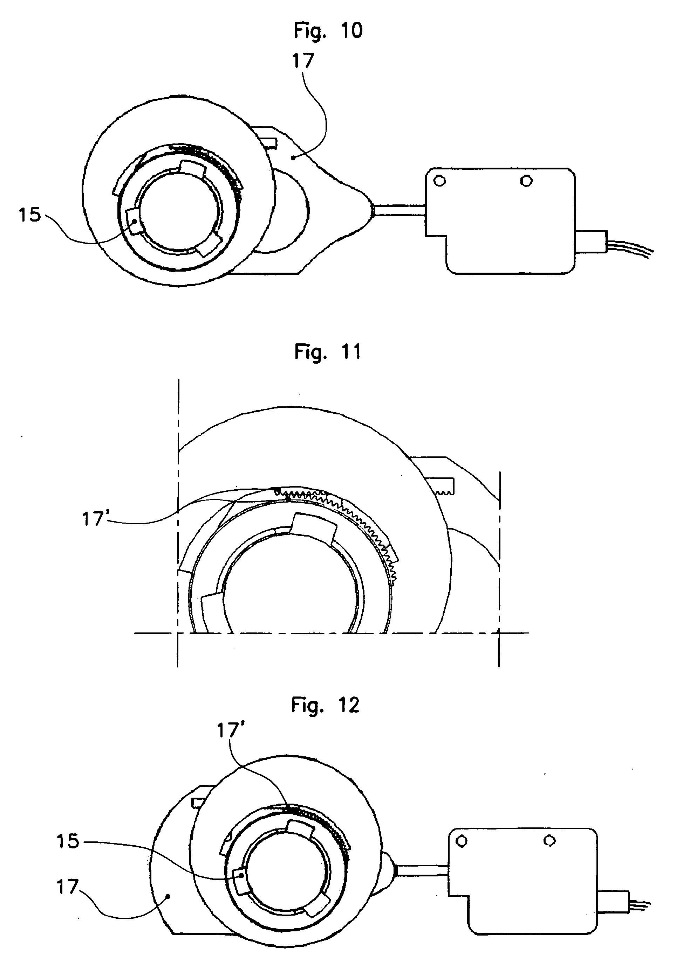

The present invention is illustrated in a non-limiting manner by Figures 1 to 18, which illustrate certain particular cases of the embodiments described above.

### Figures 1 to 7:

The system illustrated in these figures comprises:
- a shutter flap (1) and a control flap (2) carrying a protection flap (10), the movement of which entrains that of the shutter flap (1);
- a body (3) provided with an axis (4) around which the flaps (1, 2) are movable and which comprises recesses (5) of helical shape for guiding the movement of the flaps (1, 2);
- a seal (6) affixed between the shutter flap (1) and the body (3);
- a spring (7) compressed by the flaps (1, 2) in the locked position and imparting a helical upward (during unlocking) or downward (during locking) movement to the flaps (1, 2);
- a cover (8) comprising a hole (9) for clearing the filler pipe (not shown) in the open position of the system and which is aligned with a corresponding hole (9') in the body (3);
- an anti-dust seal (11) for the protection shield.

Figures 1. to 3 show the system in the locked position, the spring and the seal being compressed by the flaps (1, 2). Figure 2 is a section through the system of the figure in a plane intersecting the axis (4) and the flaps (1, 2), and Figure 3 is a partial view of the system of Figure 1 in which the cover (8) and the protection shield (10) have been removed.

In this system, the protection shield (10) is carried by (i.e. covers, is entirely integral with and moves at the same time as) the control flap and it has been designed in order to close off the hole (9) of the cover (8) in the closed, locked position of the system and to be movable and able to slide by translation on the cover (8) during unlocking/opening of the system, the control (2) and shutter (1) flaps being in turn movable below the cover (8).

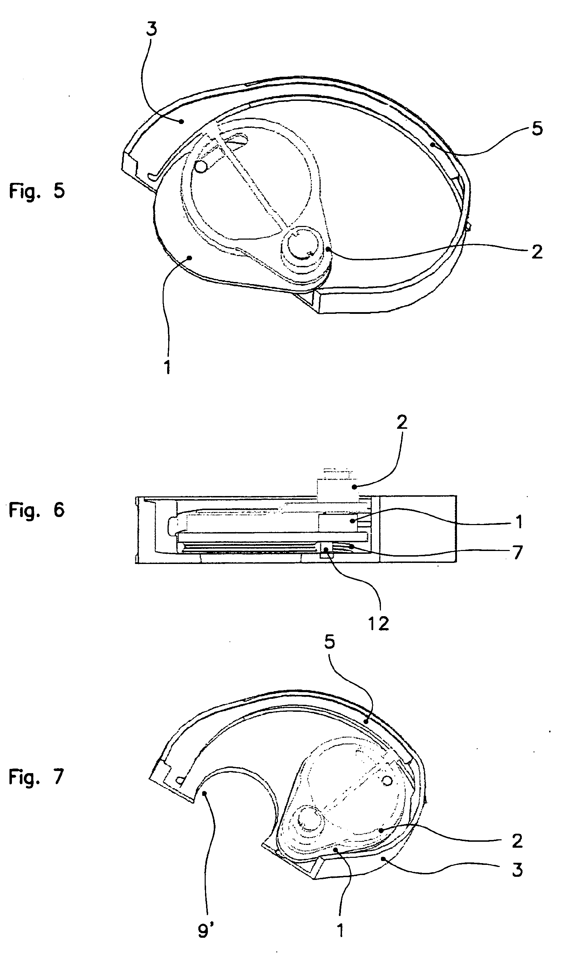

By means of manual action on an unlocking control, an actuator (not shown) imparts a helical upward movement to the control flap (2), which thus releases the compression it was exerting on the shutter flap (1) and the underlying seal (6) and also, releases a positioning lug (12) for the shutter flap (1) (see Figures 4 to 6). Next, the helical movement of the control flap (2) entrains that of the shutter flap (1) (via a helical movement, also) and ends by clearing the hole (9) and thus opening the pipe to allow filling (see Figure 7).

Return of the shutter to the closed, locked position takes place via the same sequences as those described above, although in reverse (the control flap (2) entrains the shutter flap (1) into its closed position via a helical movement, the end of rotation of the control flap (2) entraining compression of the seal (6)).

### Figures 8 to 12

The system illustrated in these figures comprises:
- a plate (13) and a rotary ring (14) that collaborate via a bayonet system comprising recesses (15) arranged on the inner cylindrical surface of the ring (14) and studs (16) on the periphery of the plate (13);
- a protection shield (17) that collaborates with the rotary ring (14) either via a direct connection (see Figures 8 and 9) or via a rack system in which the protection shield (17) and the rotary ring (14) are both provided with notches (16). This system is illustrated in greater detail in Figures 10 to 12, Figure 10 showing the system locked, Figure 11 showing a detail of the notches (17'), and Figure 12 showing the system unlocked. It should be noted that the bayonet system is shown only diagrammatically by means of the recesses (15) in these figures;
- a "dual effect" actuator (18) that locks/unlocks the system by giving rise to the translational movement of the protection shield (17) respectively towards the left or towards the right in the figures. This actuator may be activated by means of push-button, which may, for example, by located in the filling bowl or in the vehicle's passenger compartment.

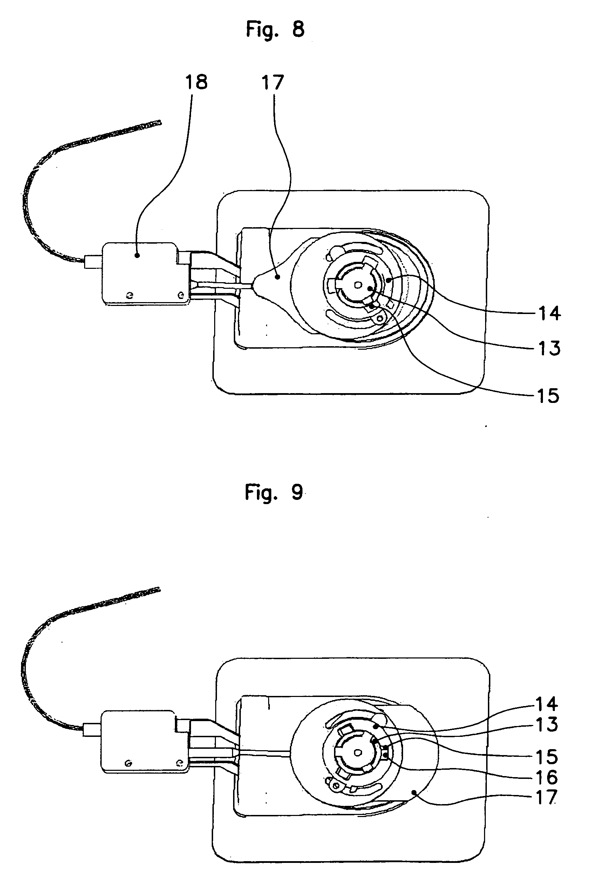

In this system, the translational movement of the protection shield (17) gives rise to the rotation of the ring (14) (see Figures 8 and 9) and thus either opening of the bayonet system to allow tilting of the shutter (15) via a thrust with the aid of the filling dispensing nozzle (not shown) or its closure.

### Figures 13 to 18

The system illustrated in these figures comprises:
- a rotary ring (19) and a plate (20) that collaborate via a bayonet system as described for the preceding figures;
- a rod (21) connected to a fuel flap (22) on the one hand and to the rotary ring (19) on the other. This rod (21) is integral with a movable component (23) that slides around a shaft (24);
- a protection shield (25) whose extension in the form of an arm (26) slides around the same shaft (24);
- a return spring (27) inserted between the movable component (23) and the extension of the protection shield (26) and placed in a torsional arrangement around the shaft (24);
- a push-button (28) connected to a lever arm (29) ending in a blocking lug (30) for holding the protection shield (25) in a closed position (covering the opening of the filler pipe and its shutter) by insertion of the lug (30) in a chamber (31) especially made for that purpose in the protection shield (25).

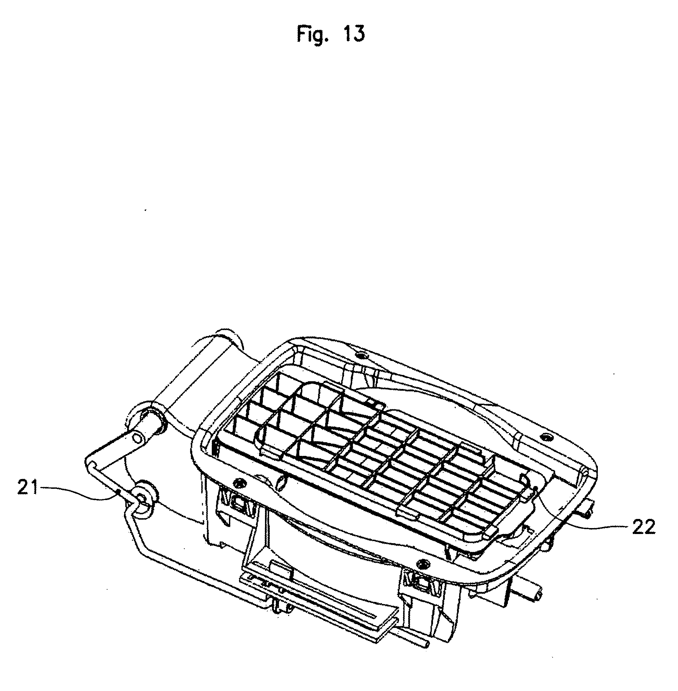

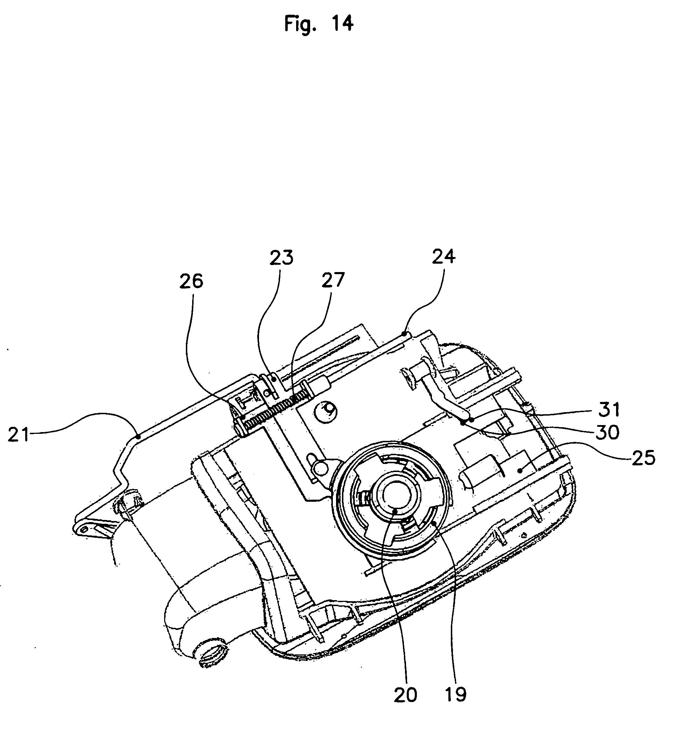

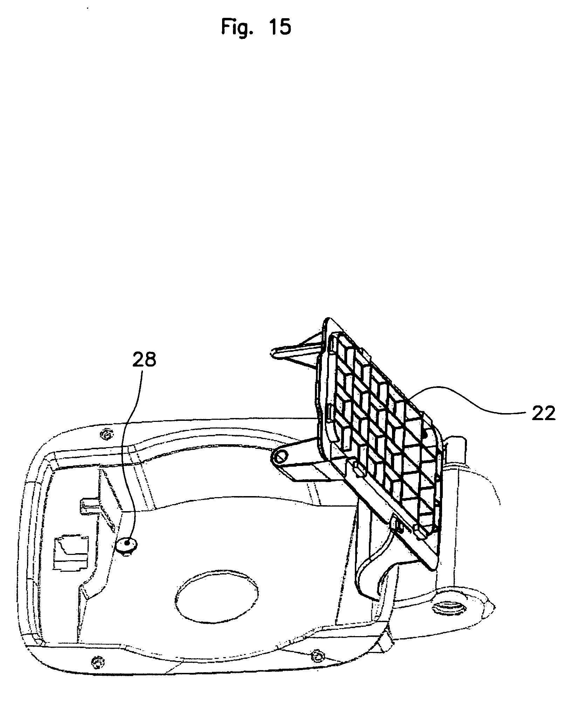

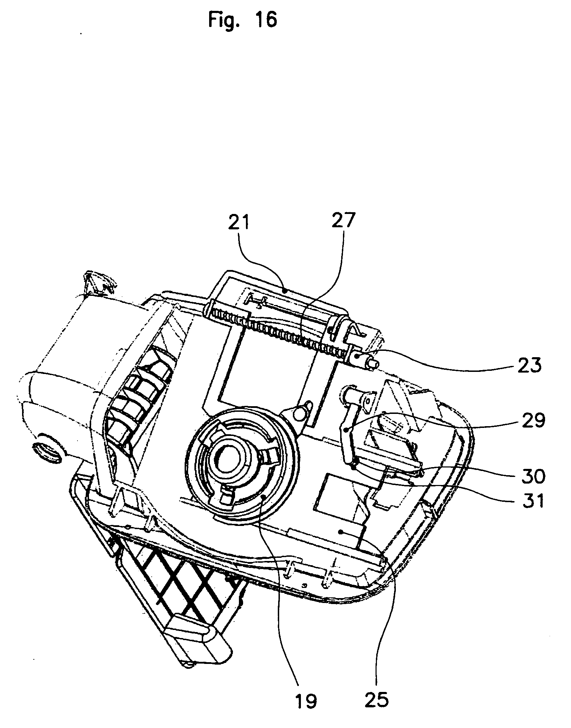

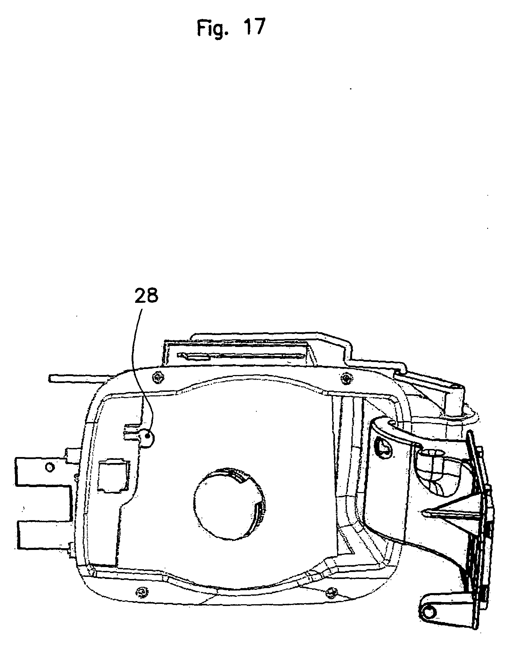

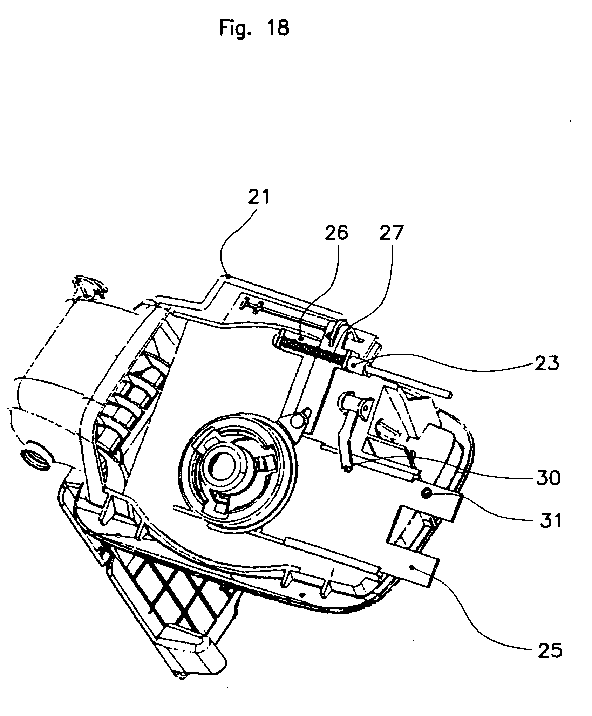

This system functions as follows: in the locked position (Figures 13 and 14), the blocking lug (30) holds the protection shield (25) in the closed position by its positioning in the chamber (31), and the return spring (27) is in the rest position between the two components (23, 26). Upon opening of the fuel flap (22) (Figures 15 and 16), the rod (21) gives rise to the rotation of the ring (19) and tensioning of the return spring (27) in the wake of the displacement of the movable element (23). Then, by means of manual action on the push-button (28), the blocking lug (30), emerging from its chamber (31), releases the shield (25), which, by relaxation of the return spring (27), is retracted and frees access to the plate (20) (see Figures 17 and 18), which can then tilt through the effect of a thrust by means of the filling dispensing nozzle (not shown). Next, when filling has been completed and the fuel flap (22) re-closed, the rod (21) gives rise to sliding of its movable element (23), which entrains rotation of the rotary ring (19) and also the return spring (27) and the protection shield via its extension (26) in order to re-lock the assembly (a return, therefore, to the situation illustrated in Figures 13 and 14).

## Claims

1. - Filler pipe incorporating a closure system as part of a set of components that are mounted on its head, said closure system comprising a shutter (1,16,20) and a protection shield (10, 17, 25) for the shutter, said shield being movable in one plane, **characterized in that** said closure system also comprises:
- 2 flaps, including a shutter flap (1) and a control flap (2) carrying the protection shield (10);
- a body (3) provided with an axis (4) around which the flaps (1,2) are movable and recesses (5) of appropriate form for guiding the movement of the flaps; and
- a seal (6) placed between the shutter flap (1) and the body (3).

2. - Filler pipe according to the preceding claim, **characterized in that** the plane in which the protection shield (10, 17,25) is movable is a plane perpendicular to the axis of the pipe.

3. - Filler pipe according to any one of the preceding claims, **characterized in that** the closure system comprises a locking mechanism activated with the aid of an actuator connected to a control button that is inactive as long as the vehicle's central locking system is activated.

4. - Filler pipe according to any of the preceding claims, **characterized in that** the body axis (4) is provided with a spring (7) compressed by the flaps (1, 2) in the locked position and imparting a helical movement to the flaps (1,2), the guide recesses (5) in the body (4) also being of helical form and imparting a helical movement to the flaps (1,2).

5. - Filler pipe according to the preceding claim, **characterized in that** the closure system also comprises a cover (8) comprising a hole (9) for clearing the filler pipe in the open position of the system, and **in that** the protection shield (10) is designed to close off the hole of the cover (9) in the closed, locked position of the system and to be movable and to be able to slide by translation over the cover (8) during unlocking/opening of the system, the control (2) and shutter (1) flaps themselves being movable below the cover (8).

## Patentansprüche

1. Einfüllstutzen mit einem Verschlusssystem als Teil eines Satzes Komponenten, die an seinem Kopf montiert sind, wobei das Verschlusssystem eine Verschließvorrichtung (1, 16, 20) und eine Schutzabdeckung (10, 17, 25) für die Verschließvorrichtung umfasst, wobei die Abdeckung in einer Ebene beweglich ist, **dadurch gekennzeichnet, dass** das Verschlusssystem ferner Folgendes umfasst:
- 2 Klappen, einschließlich einer Verschließvorrichtungsklappe (1) und einer Steuerklappe (2), die die Schutzabdeckung (10) trägt,
- einen Körper (3), der mit einer Achse (4), um die die Klappen (1, 2) beweglich sind, und Ausnehmungen (5) mit geeigneter Form zum Führen der Bewegung der Klappen versehen ist, und
- eine Dichtung (6) zwischen der Verschließvorrichtungsklappe (1) und dem Körper (3).

2. Einfüllstutzen nach dem vorhergehenden Anspruch, **dadurch gekennzeichnet, dass** die Ebene, in der die Schutzabdeckung (10, 17, 25) beweglich ist, eine senkrecht zur Achse des Stutzens verlaufende Ebene ist.

3. Einfüllstutzen nach einem der vorhergehenden Ansprüche, **dadurch gekennzeichnet, dass** das Verschlusssystem einen Verriegelungsmechanismus umfasst, der mittels eines Stellglieds betätigt wird, das mit einer Steuertaste verbunden ist, die inaktiv ist, solange die Zentralverriegelung des Fahrzeugs aktiviert ist.

4. Einfüllstutzen nach einem der vorhergehenden Ansprüche, **dadurch gekennzeichnet, dass** die Körperachse (4) mit einer Feder (7) versehen ist, die durch die Klappen (1, 2) in der verriegelten Position zusammengedrückt wird und den Klappen (1, 2) eine spiralförmige Bewegung verleiht, wobei die Führungsausnehmungen (5) im Körper (4) auch spiralförmig sind und den Klappen (1, 2) eine spiralförmige Bewegung verleihen.

5. Einfüllstutzen nach dem vorhergehenden Anspruch, **dadurch gekennzeichnet, dass** das Verschlusssystem auch einen Deckel (8) mit einem Loch (9) zum Freilassen des Einfüllstutzens in der offenen Position des Systems umfasst, und dass die Schutzabdeckung (10) dazu ausgelegt ist, das Loch des Deckels (9) in der geschlossenen, verriegelten Position des Systems zu verschließen, beweglich zu sein und beim Entriegeln/Öffnen des Systems durch Translation über den Deckel (8) gleiten zu können, wobei die Steuerung (2) und die Verschließvorrichtungsklappen (1) ihrerseits unter den Deckel (8) bewegt werden können.

## Revendications

1. Tuyau de remplissage incorporant un système de fermeture faisant partie d'un ensemble de composants qui sont montés sur sa tête, ledit système de fermeture comprenant un obturateur (1, 16, 20) et un bouclier de protection (10, 17, 25) pour l'obturateur, ledit bouclier pouvant être déplacé dans un plan, **caractérisé en ce que** ledit système de fermeture comprend également :
- 2 volets, comportant un volet d'obturation (1) et un volet de commande (2) portant le bouclier de protection (10) ;
- un corps (3) pourvu d'un axe (4) autour duquel les volets (1, 2) peuvent être déplacés et de retraits (5) de forme appropriée pour guider les mouvements des volets ; et
- un joint (6) placé entre le volet d'obturation (1) et le corps (3).

2. Tuyau de remplissage selon la revendication précédente, **caractérisé en ce que** le plan dans lequel le bouclier de protection (10, 17, 25) est déplaçable est un plan perpendiculaire à l'axe du tuyau.

3. Tuyau de remplissage selon l'une quelconque des revendications précédentes, **caractérisé en ce que** le système de fermeture comprend un mécanisme de verrouillage activé à l'aide d'un actionneur connecté à un bouton de commande qui est inactif tant que le système de verrouillage central du véhicule est activé.

4. Tuyau de remplissage selon l'une quelconque des revendications précédentes, **caractérisé en ce que** l'axe (4) du corps est pourvu d'un ressort (7) comprimé par les volets (1, 2) dans la position verrouillée et conférant un mouvement hélicoïdal aux volets (1, 2), les retraits de guidage (5) dans le corps (3) étant également de forme hélicoïdale et conférant un mouvement hélicoïdal aux volets (1, 2).

5. Tuyau de remplissage selon la revendication précédente, **caractérisé en ce que** le système de fermeture comprend aussi un couvercle (8) comprenant un trou (9) pour dégager le tuyau de remplissage dans la position ouverte du système, et **en ce que** le bouclier de protection (10) est conçu pour fermer le trou (9) du couvercle dans la position fermée et verrouillée du système et pour pouvoir être déplacé et coulissé par translation par-dessus le couvercle (8) au cours du déverrouillage ou de l'ouverture du système, les volets de commande (2) et d'obturation (1) pouvant eux-mêmes être déplacés sous le couvercle (8).
